Europäisches Patentamt

European Patent Office

Office européen des brevets

(19)

(11) EP 1 079 909 B1

(12) FASCICULE DE BREVET EUROPEEN

(45) Date de publication et mention
de la délivrance du brevet:
26.03.2003 Bulletin 2003/13

(21) Numéro de dépôt: 99919320.4

(22) Date de dépôt: 11.05.1999

(51) Int Cl.⁷: $B01D\ 53/22$, $B01D\ 53/04$, $B01D\ 59/50$

(86) Numéro de dépôt international:
PCT/FR99/01120

(87) Numéro de publication internationale:
WO 99/058225 (18.11.1999 Gazette 1999/46)

(54) **PROCEDE DE PURIFICATION, ET DE CONCENTRATION EN UN CONSTITUANT MINORITAIRE, D'UN MELANGE GAZEUX, PROCEDE DE DETECTION DE CE CONSTITUANT, ET INSTALLATION**

VERFAHREN ZUR REINIGUNG UND KONZENTRIERUNG EINER NEBENKOMPONENTE EINES GASGEMISCHES, VERFAHREN ZUM NACHWEIS DERSELBEN UND ANLAGE

METHOD FOR PURIFYING A GASEOUS MIXTURE AND CONCENTRATING IT INTO A MINOR CONSTITUENT, METHOD FOR DETECTING SAID CONSTITUENT, AND INSTALLATION

(84) Etats contractants désignés:
AT BE CH CY DE DK ES FI FR GB GR IE IT LI LU
MC NL PT SE

(30) Priorité: 12.05.1998 FR 9805961

(43) Date de publication de la demande:
07.03.2001 Bulletin 2001/10

(73) Titulaire: **COMMISSARIAT A L'ENERGIE ATOMIQUE**
75752 Paris Cédex 15 (FR)

(72) Inventeurs:
• **CHIAPPINI, Remo**
F-94240 L'Hay les Roses (FR)

• **FONTAINE, Jean-Pierre**
F-91680 Bruyères le Chatel (FR)
• **HAMONET, Michel**
F-94550 Chevilly Larue (FR)
• **THOUARD, Michel**
F-75020 Paris (FR)

(74) Mandataire: **Audier, Philippe André et al
Brevatome,
3, rue du Docteur Lancereaux
75008 Paris (FR)**

(56) Documents cités:
GB-A- 1 605 041       US-A- 4 293 316
US-A- 4 701 187       US-A- 4 863 492
US-A- 5 632 803

## Description

La présente invention est relative à un procédé de purification, et de concentration en un constituant minoritaire, d'un mélange gazeux, à un procédé de détection de ce constituant, et à une installation pour la mise en oeuvre de ce procédé.

Plus précisément, l'invention concerne un procédé de purification, d'un premier constituant minoritaire et de concentration de celui-ci dans le constituant majoritaire d'un mélange gazeux, comprenant outre lesdits premier constituant minoritaire et constituant majoritaire, un ou plusieurs autre(s) constituant(s) minoritaire(s), afin d'obtenir un mélange gazeux final fortement enrichi en ledit premier constituant minoritaire par rapport au mélange gazeux initial.

Le mélange gazeux traité est en particulier de l'air atmosphérique dont on cherche à concentrer certains des gaz rares en particulier le Xénon et notamment les espèces naturelles et radioactives du Xénon.

L'invention associée à une spectrométrie nucléaire trouvera donc son application à la détection de ces espèces, peu abondantes dans l'atmosphère, et à la surveillance de l'environnement des installations nucléaires.

La littérature mentionne différentes méthodes d'extraction in situ de constituants minoritaires d'un mélange gazeux, par exemple de gaz rares et notamment de Xénon à partir de l'air, en particulier à des fins de détection.

Le premier des procédés envisagés a été la distillation de l'air liquéfié, comme cela est décrit dans le document de Y.V.Bubasov, Y.S.Popov, "Technical means of radioactive inert gas monitoring for detection of underground nuclear explosions", Khiopin Radium Institute, St Petersburg, Russia.

Un tel procédé nécessite des installations importantes et une consommation d'énergie considérable pour amener l'air jusqu'à son point de liquéfaction.

Il a ensuite été proposé un procédé mettant en oeuvre l'adsorption physique sur des substrats solides à très basse température comme cela est décrit dans le document de I.Vintersved, L.E. De Geer, "Swedish experience of radionuclide monitoring", IAEA meeting in Helsinki 10-12 Dec 1996 on Long Range Wide Area Environmental Monitoring, et dans le document de T.W. Bowyer, K.H. Abel "Automatic Radioxenon Analyzer for CTBT Monitoring", Report PNNL-11 424, UC-713, November 1996, prepared for the U.S. DOE.

Ce procédé consiste à fixer, un par un, les différents constituants minoritaires de l'air, à basse et très basse température, sur des substrats solides spécifiques par exemple, zéolithe, charbon actif, gel de silice. On élimine ainsi successivement la vapeur d'eau, le dioxyde de carbone puis le radon et on finit par piéger le Xénon.

Ce procédé présente l'inconvénient d'opérer à des températures - généralement voisines de - 110°C - nécessitant la mise en oeuvre de techniques cryogéniques, allant de pair avec des installations complexes et une importante consommation d'énergie.

Par ailleurs, le fonctionnement du système est fréquemment perturbé par la formation de bouchons dus à la congélation de l'eau dans l'un des adsorbants.

Dans ce procédé on opère avec une cascade d'adsorbants dont chacun est consacré à l'adsorption d'un des constituants de l'air de départ.

Il est donc nécessaire d'avoir recours à un nombre considérable de substrats ou adsorbants, de plus, du fait que chaque étape d'adsorption est appliquée à l'intégralité ou à la quasi intégralité du volume d'air de départ, et que les volumes de gaz minoritaires éliminés tels que le dioxyde de carbone et l'eau sont très importants, le volume des substrats d'adsorption est également conséquent.

Le volume important des substrats d'adsorption se répercute sur le volume de l'installation et entraîne des difficultés lors de la régénération de ces substrats volumineux par chauffage et passage d'un gaz d'élution qui nécessite de longues durées ainsi qu'une consommation d'énergie et des quantités d'éluants importantes.

Un procédé de récupération d'un constituant minoritaire -l'hélium- à partir d'un mélange gazeux est décrit dans US-A-5 632 803, qui comprend au moins une étape d'enrichissement à membrane suivi par au moins deux étapes d'adsorption à cycles alternés de pression (PSA) mettant en oeuvre des adsorbants sélectifs permettant l'adsorption de tous les gaz, à l'exception de celui dont on veut enrichir le gaz d'entrée. Ce procédé ne permet pas d'obtenir un enrichissement suffisant.

Le document US-A-4 293 316 concerne un système d'alimentation pour un dispositif d'analyse de gaz dans lequel le mélange gazeux à analyser passe tout d'abord par un adsorbeur qui adsorbe préférentiellement le constituant visé qui est ensuite désorbé et envoyé dans un séparateur à membrane pour le débarrasser de la vapeur d'eau et d'autres constituants gazeux restants.

Il existe donc un besoin pour un procédé de séparation des constituants d'un mélange gazeux qui nécessite un nombre limité d'étapes, en particulier d'étapes d'adsorption, qui puisse être mis en oeuvre sous un volume réduit, qui opère à une température voisine de la température ambiante sans faire appel à un dispositif cryogénique important et consommateur d'énergie, qui soit simple à mettre en oeuvre et qui permette le traitement de volumes importants de gaz.

Le but de l'invention est de fournir un procédé qui réponde entre autres à ces besoins, et qui ne présente pas les inconvénients, limitations, défauts et désavantages des procédés de l'art antérieur et qui résolve les problèmes posés par les procédés de l'art antérieur.

Ce but, et d'autres encore, sont atteints, conformément à l'invention, par un procédé de purification, d'un premier constituant minoritaire et de concentration de celui-ci dans le constituant majoritaire, d'un mélange gazeux, comprenant outre ce premier constituant minoritaire, et ledit constituant majoritaire/un ou plusieurs autre(s) constituant(s) minoritaire(s), ledit procédé comprenant la succession d'étapes suivantes :

- Perméation sélective dudit mélange gazeux initial à travers une membrane de perméation sélective spécifique du mélange gazeux traité, moyennant quoi on obtient un mélange gazeux enrichi en ledit premier constituant minoritaire et très appauvri ou faiblement enrichi en ledit ou lesdits autre(s) constituant(s) minoritaire(s),

- Purification dudit mélange gazeux enrichi en ledit premier constituant minoritaire, issu de la première étape, par adsorption à température ambiante sur un absorbant solide, puis élution, moyennant quoi on obtient un mélange gazeux essentiellement constitué dudit constituant majoritaire et dudit premier constituant minoritaire et duquel ont été éliminés le ou les autre(s) constituant(s) minoritaire(s),

- Concentration dudit premier constituant minoritaire dans le constituant majoritaire, issu de la deuxième étape, par adsorption(s) et élution(s) successive(s) sur un adsorbant solide jusqu'à obtention d'un mélange gazeux final essentiellement constitué dudit constituant majoritaire et dudit premier constituant minoritaire, fortement enrichi en ledit premier constituant minoritaire par rapport au mélange gazeux initial, et présentant la concentration désirée en ledit premier constituant minoritaire.

L'invention consiste donc en l'association, combinaison, ou couplage de deux techniques de séparation de gaz, d'une part la perméation sélective à travers la paroi, notamment de polymère, d'une membrane spécifique du mélange gazeux traité, d'autre part l'adsorption des gaz sur un substrat solide.

Le couplage, selon l'invention, n'est ni décrit, ni suggéré, dans l'art antérieur ou les procédés décrits mettent en oeuvre pour des buts similaires une seule technique de séparation à savoir soit la distillation, par exemple de l'air liquéfié, soit l'adsorption, sur plusieurs adsorbants spécifiques.

Grâce au procédé de l'invention, et au couplage des deux techniques qu'il utilise, on évite d'avoir recours à la liquéfaction du mélange gazeux tel que de l'air, et on fait donc l'économie d'un dispositif cryogénique important.

La membrane de perméation sélective produit en continu, sans régénération, un mélange gazeux enrichi en constituant minoritaire voulu et très appauvri en autre(s) constituant(s) minoritaire(s).

De ce fait, le nombre des adsorbants solides mis en oeuvre dans les étapes suivantes, selon l'invention de purification et de concentration est très réduit par rapport au nombre considérable d'adsorbants nécessaires dans le second des procédés de l'art antérieur où l'on procède à la fixation un par un de chacun des différents constituants minoritaires du mélange gazeux, chaque fois sur un substrat spécifique.

La membrane permet , en d'autres termes de supprimer la cascade d'adsorbants mis en oeuvre dans les procédés de l'art antérieur qui sont destinés à piéger tous les gaz dont les points de congélation sont plus élevés que le gaz recherché tel que le xénon dans le cas de l'air.

Le volume des substrats mis en oeuvre pour l'adsorption dans les étapes de purification et de concentration s'en trouve également considérablement diminué, ce qui facilite leur régénération, et diminue la consommation d'énergie pendant la désorption, généralement réalisée par chauffage, ainsi que les volumes de gaz utilisé pendant l'élution.

Par ailleurs, le volume des constituants à fixer par adsorption est, du fait de l'étape préalable réalisé sur membrane, nettement plus faible que dans l'art antérieur.

Ensuite, les opérations d'adsorption, sont selon l'invention généralement réalisées à température ambiante, sans qu'il soit nécessaire, comme dans l'art antérieur d'utiliser des techniques cryogéniques pour abaisser la température du mélange gazeux, il en résulte une économie d'énergie importante ; le fait d'opérer à température non cryogénique évite également la formation de bouchons d'eau solide dans l'installation.

Enfin, de préférence, l'invention est autonome en gaz d'élution puisqu'elle réutilise avantageusement, et sans stockage, le constituant majoritaire du mélange gazeux tel que l'azote, purifié lors des opérations d'adsorption, pour éluer le premier constituant minoritaire.

Il ressort ainsi de ce qui précède que le procédé selon l'invention, du fait notamment de l'utilisation de la membrane de perméation, du nombre réduit d'adsorbants allant de pair avec leur faible volume, et de l'absence de cryogénie, constitue un procédé simple, robuste, et peu coûteux de purification, et de concentration en un constituant minoritaire, d'un mélange gazeux.

Le procédé selon l'invention peut s'appliquer à n'importe quel mélange gazeux, pour lequel il existe, ou il pourrait exister, une membrane spécifique du constituant majoritaire, de même, le procédé selon l'invention permet la concentration dudit mélange en un premier constituant minoritaire quelle que soit la nature, et la concentration initiale (minoritaire) dudit premier constituant minoritaire, et quels que soient par ailleurs la nature du ou des autre(s) constituant(s) minoritaire(s) ainsi que leur(s) concentration(s) dans le mélange initial.

Ainsi le mélange gazeux pourra-t-il être un mélange gazeux dont le constituant majoritaire est choisi par exemple parmi l'azote, l'hydrogène, l'oxygène, les hydrocarbures gazeux tel que le méthane, le dioxyde de carbone, etc...

Par constituant majoritaire on entend généralement le constituant dont la teneur, exprimée en pourcentage en volume dans le mélange gazeux initial est la plus importante, généralement cette teneur est supérieure à 50 % en volume.

Le mélange gazeux qui est traité par le procédé selon l'invention est de préférence de l'air. Ledit premier constituant minoritaire en lequel on souhaite concentrer le mélange peut être choisi de même par exemple parmi l'azote, l'hydrogène, l'oxygène, un hydrocarbure gazeux tel que le méthane, et le dioxyde de carbone.

Ledit premier constituant minoritaire peut également être choisi parmi les gaz rares : Hélium, Néon, Argon, Krypton, Xénon et Radon.

De préférence ledit premier constituant minoritaire est le xénon en particulier lorsque ledit mélange gazeux initial est de l'air.

Ledit premier constituant minoritaire peut par ailleurs se trouver dans n'importe quelle composition isotopique, c'est-à-dire sous la forme de l'un quelconque de ses isotopes radioactifs ou non, ou d'un mélange deux ou plus de ceux-ci.

Ainsi dans le cas du xénon, celui-ci peut-il être sous la forme de l'un de ses isotopes naturels, stables, non radioactifs : $^{124}$Xe, $^{126}$Xe, $^{128}$Xe, $^{129}$Xe, $^{130}$Xe, $^{131}$Xe, $^{132}$Xe, $^{134}$Xe, $^{136}$Xe ou de l'un de ces isotopes artificiels radioactifs : $^{135}$Xe, $^{133}$Xe, $^{131m}$Xe, $^{133m}$Xe, ou d'un mélange de deux ou plusieurs de ces isotopes.

Généralement, le Xénon est sous la forme de Xénon naturel (formé du mélange de ses isotopes naturels) en mélange avec un ou plusieurs de ses isotopes artificiels tels que le $^{135}$Xe, $^{133}$Xe, $^{131m}$Xe, $^{133m}$Xe.

Les autres constituants minoritaires du mélange gazeux se déduisent aisément de ce qui précède, dans le cas de l'air ces constituants sont donc l'oxygène, le dioxyde de carbone, la vapeur d'eau, les autres gaz rares, les impuretés et autres polluants susceptibles d'être présents dans l'air traité.

La concentration dudit premier constituant minoritaire peut varier dans de larges limites, elle peut aller de $10^{-6}$% à 50% en volume, par exemple jusqu'à 10% en volume, ainsi dans le cas du Xénon contenu dans l'air cette concentration est elle généralement de 87 ppb, à savoir $0,87.10^{-7}$ cm$^3$ Xe/cm$^3$ d'air et le procédé selon l'invention permet par exemple de produire 5 cm$^3$ de Xe dans 20 cm$^3$ d'azote soit un enrichissement d'un facteur $2.10^6$ en Xe.

La membrane spécifique du mélange gazeux traité mise en oeuvre dans la première étape ou étape de perméation sélective est généralement une membrane artificielle en fibres de polymère.

De telles membranes sont connues de l'homme du métier et sont disponibles dans le commerce, ainsi dans le cas de l'air, on pourra utiliser un dispositif à membrane industriel, connu sous le nom de générateur d'azote pur.

D'autres membranes spécifiques d'autres mélanges gazeux et permettant un enrichissement en d'autres constituants minoritaires sont également disponibles.

A l'issue de la première étape du procédé selon l'invention, le mélange gazeux est "enrichi" en ledit premier constituant minoritaire, c'est-à-dire que la concentration en volume, du premier constituant minoritaire dans ce mélange est supérieure à sa concentration sous le mélange gazeux initial.

Par exemple, cette concentration est multipliée d'un facteur allant de 2 à 20 de préférence de 9 à 10 comme c'est le cas du Xénon lorsque de l'air est traité.

Le mélange gazeux issu de la première étape du procédé selon l'invention est par ailleurs très appauvri en ledit ou lesdits autre(s) constituant(s) minoritaire (s), cela signifie généralement que la concentration en ce ou ces constituant(s) minoritaire(s) dans le mélange gazeux issu de la première étape du procédé est inférieur ou très inférieur à leur concentration dans le mélange gazeux initial par exemple d'un facteur 2 à $10^3$, ce ou ces constituant(s) minoritaire(s) sont ainsi à l'état de "traces" dans le mélange gazeux issu de la première étape, voire totalement éliminés.

Selon l'invention, et pour obtenir un enrichissement optimal en premier constituant minoritaire et un fort appauvrissement en le ou les autre(s) constituant (s) minoritaire(s), il y a lieu d'agir sur les conditions expérimentales dans lesquelles est réalisée la perméation, on règle de préférence le débit de mélange gazeux traversant la membrane et quittant celle-ci et/ou la pression imposée en amont de la membrane.

Dans le cas de l'air, si on souhaite un fort enrichissement en Xe il sera préférable d'opérer à débit "faible" et sous pression.

Par débit faible, on entend que le débit d'éluat quittant le système de perméation ne représente qu'une petite portion du débit entrant de mélange gazeux initial, à savoir par exemple de 1/100 à 1/50.

La pression est généralement dans le cas de l'air de 5 à 10 bars.

Lors de l'étape de purification, selon le procédé de l'invention, on choisit généralement un adsorbant spécifique, présentant une affinité suffisamment forte vis-à-vis dudit premier constituant minoritaire, pour que l'adsorption de ce premier constituant minoritaire soit réalisée avec un rendement élevé, supérieur par exemple à 99%, sur un volume d'adsorbant réduit, et selon l'invention, à température ambiante.

La nature de l'adsorbant solide mis en oeuvre dans cette étape dépend essentiellement du premier constituant minoritaire.

Dans le cas où le premier constituant est du Xénon (traitement de l'air), il s'est avéré que le charbon actif, par exemple le charbon actif Merck® de surface spécifique égale à 1000 m$^2$/g convenait particulièrement bien en tant qu'adsorbant solide dans l'étape de purification.

D'autres adsorbants solides concernant spécifiquement l'adsorption d'autres "premiers constituants minoritaires" sont notamment le tamis moléculaire (zéolithe), l'alumine, le gel de silice.

Pour un débit d'éluat imposé par la membrane, la géométrie de la colonne de rétention est adaptée de manière à trouver un compromis entre un piège long de grande capacité de stockage, mais difficile à désorber, causant une forte perte de charge, et un piège court de faible capacité, mais simple à désorber.

Ainsi, dans le cas de l'air et du Xénon, on opérera de nouveau à débit faible, égal au débit faible défini plus haut qui quitte le système de perméation, et sous pression, c'est-à-dire à la pression définie ci-dessus pour la première étape.

Selon l'invention, les conditions de l'élution notamment débit de gaz d'élution, et/ou température d'élution, et/ou pression, et/ou durée d'élution, sont choisies de façon à permettre la séparation du premier constituant minoritaire du mélange gazeux, du ou des autre(s) constituant(s) minoritaire(s) du mélange gazeux, c'est-à-dire l'élution dudit premier constituant minoritaire du mélange gazeux, indépendamment du ou des autre(s) constituant(s) minoritaire(s) du mélange gazeux afin d'obtenir un mélange gazeux essentiellement constitué dudit constituant majoritaire et dudit premier constituant minoritaire.

Par exemple, dans le cas du traitement de l'air et de son enrichissement en Xénon, il a été établi que, à partir d'une température de 250°C et en opérant à faible débit et sous pression, le Xénon était préférentiellement élué.

Avantageusement, selon l'invention, l'étape de purification comprend au moins deux systèmes ou dispositifs d'adsorption garnis d'adsorbant solide, l'un de ces dispositifs se trouvant en phase d'adsorption, tandis que l'autre se trouve en phase de désorption, le gaz d'élution utilisé pour la désorption étant constitué par le constituant majoritaire purifié directement issu du dispositif en phase d'adsorption et sans stockage intermédiaire.

C'est là un des avantages supplémentaires de l'invention que de supprimer de la sorte la nécessité d'une alimentation et de stockages extérieurs volumineux en gaz d'élution.

Lors de l'étape de concentration, on concentre le mélange gazeux issu de la deuxième étape de purification, en ledit premier constituant minoritaire, par adsorption(s) et élution(s) successive(s) sur un adsorbant solide.

La concentration est réalisée en multipliant les étapes d'adsorption-désorption et en réduisant à chaque fois la masse d'adsorbant utilisé ainsi que le volume de gaz éluant.

L'adsorbant utilisé dans cette étape est un adsorbant spécifique qui présente de nouveau une affinité élevée vis-à-vis du premier constituant minoritaire et qui est généralement différent de l'adsorbant de l'étape de purification.

Cet adsorbant est par exemple dans le cas du Xénon, un charbon actif connu sous le nom de Carboxène® 1003, d'autres adsorbants utilisés dans cette étape de concentration sont par exemple d'autres charbons actifs comme le Carbosieve® SIII.

Le nombre d'adsorptions mis en oeuvre dans cette étape de concentration dépend de la concentration finale, en premier constituant minoritaire, que l'on souhaite obtenir dans le mélange gazeux final.

Ce nombre d'adsorption peut aller de 1 à 4.

Par fort enrichissement, on entend que la concentration exprimée en % en volume en premier constituant minoritaire dans le mélange gazeux final est accrue d'un facteur $10^{+4}$ à $10^{+6}$ par rapport à la concentration dans le mélange gazeux initial.

L'invention concerne en outre un procédé de détection et/ou de mesure d'un premier constituant minoritaire d'un mélange gazeux dans lequel on réalise la purification, et la concentration en ce premier constituant minoritaire, du mélange gazeux par le procédé décrit plus haut, puis on réalise la détection et/ou la mesure de ce premier constituant minoritaire dans le mélange gazeux final à l'issue de l'étape de concentration.

La détection et/ou la mesure peut être réalisée par toute méthode de détection et/ou de mesure adéquate par exemple par spectrométrie de masse ou spectrométrie gamma.

Ce procédé de détection et/ou de mesure s'applique en particulier à la détection et/ou la mesure d'espèces radioactives ; par exemple, dans le cas où le gaz traité est de l'air, il s'agit notamment des espèces radioactives du Xénon : $^{135}$Xe, $^{133}$Xe, $^{131m}$Xe, $^{133m}$Xe et des mélanges de celles-ci ; c'est-à-dire que ledit constituant minoritaire est constitué en partie d'espèce(s) radioactive(s) du Xénon.

La détection et/ou la mesure est réalisée par spectrométrie gamma. Les espèces du Xénon qui sont très peu abondantes dans l'atmosphère ne peuvent absolument pas être détectées et/ou mesurées directement par spectrométrie lorsqu'on effectue la détection et/ou la mesure en direct sur l'air atmosphérique. Seule la concentration en Xe par le procédé de l'invention permet cette détection.

Le procédé de détection selon l'invention trouvera donc en particulier son application à la surveillance de l'environnement en général, et de l'environnement des installations nucléaires en particulier telles que centrales, usines de retraitement, et de toute autres source d'espèces radioactives.

Le procédé selon l'invention peut également être prévu pour permettre la mesure des rapports des concentrations des radio-isotopes d'un même élément. Cet élément est en particulier le Xénon.

Le procédé trouve alors son application à la discrimination des différentes sources d'émission des radio-isotopes tels que les radio xénons.

Ainsi, un rapport $\dfrac{^{135}Xe}{^{133}Xe}$ élevé est-il caractéristique d'une explosion nucléaire, tandis qu'un rapport $\frac{^{135}Xe}{^{133}Xe}$ faible est plutôt caractéristique d'une centrale.

L'invention concerne enfin une installation pour la mise en oeuvre du procédé selon l'invention. Une telle installation comprend essentiellement :

- des moyens de perméation sélective d'un mélange gazeux comprenant un premier constituant minoritaire, un constituant majoritaire, et un ou plusieurs autre(s) constituant(s) minoritaire(s), lesdits moyens de perméation comprenant au moins une membrane spécifique du mélange gazeux traité et permettant d'obtenir un mélange gazeux enrichi en ledit premier constituant minoritaire et très appauvri ou faiblement enrichi en ledit ou lesdits autre(s) constituant(s) minoritaire(s) ;
- des moyens de purification dudit mélange gazeux, enrichi en ledit premier constituant minoritaire, issu desdits moyens de perméation, lesdits moyens de purification comprenant au moins un dispositif d'adsorption tel qu'une colonne, garni d'adsorbant solide, et des moyens d'élution dudit dispositif, permettant d'obtenir un mélange gazeux essentiellement constitué dudit constituant majoritaire et dudit premier constituant minoritaire, et duquel ont été éliminés le ou les autre(s) constituant(s) minoritaire(s) ;
- des moyens de concentration dudit premier constituant minoritaire dans le constituant majoritaire issu desdits moyens de purification, lesdits moyens de concentration comprenant un nombre suffisant de dispositifs d'adsorption tels que des colonnes, garnis d'adsorbant solide, et des moyens d'élution desdits dispositifs, pour obtenir un mélange gazeux final essentiellement constitué dudit constituant majoritaire et dudit premier constituant minoritaire, fortement enrichi en ledit premier constituant minoritaire par rapport au mélange gazeux initial et présentant la concentration désirée en ledit premier constituant minoritaire.

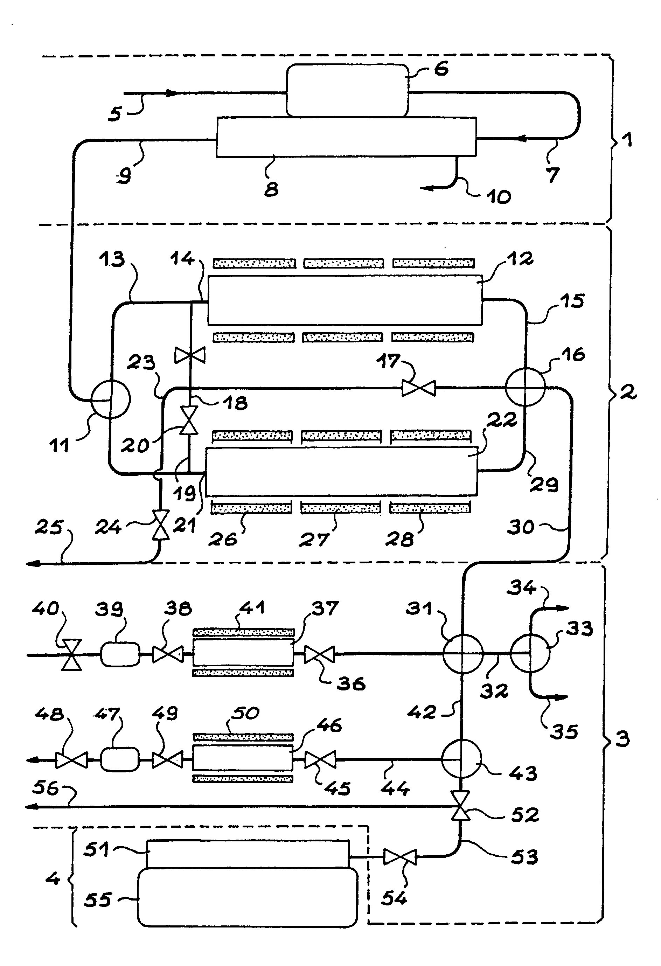

L'invention va maintenant être décrite plus en détail dans la description qui va suivre donnée à titre illustratif et non limitatif en référence au dessin annexé dans lequel la figure 1 représente le schéma fonctionnel d'une installation pour la mise en oeuvre du procédé selon l'invention.

La figure 1 illustre la mise en oeuvre du procédé de l'invention dans le cas particulier de l'air, mais il est bien évident, comme on l'a déjà mentionné plus haut que le procédé de l'invention peut s'appliquer à tout mélange gazeux, moyennant éventuellement l'adaptation de l'une ou l'autre de ses étapes au mélange gazeux spécifique traité.

De telles adaptations ou modifications entrent dans le cadre des activités normales de l'homme du métier.

Le procédé selon l'invention comprend, comme cela est décrit sur la figure 1, généralement quatre étapes essentielles que l'on a appelées par commodité, prélèvement (1), purification (2), concentration (3), et éventuellement mesure et/ou détection (4).

Dans la première étape dite étape de prélèvement (1), de l'air est prélevé en (5), cet air est généralement de l'air ambiant, c'est-à-dire que sa composition notamment en radon peut varier en fonction de la nature géologique du terrain au voisinage duquel il est prélevé suivant que ce terrain soit par exemple sédimentaire ou granitique.

Le volume d'air prélevé est variable, et peut aller de 350 à 500 m³ par exemple, sur une durée de 24 h.

L'air passe ensuite dans un dispositif destiné à élever sa pression tel qu'un compresseur (6) où il est comprimé à une pression généralement de 5 à 10 bars, de préférence de 9 bars.

L'air sous pression est ensuite introduit, en tant qu'injectat (7), dans un dispositif de perméation à membrane(s) (8) dans lequel est réalisé la perméation sélective des gaz à travers la paroi de polymère d'une membrane spécifique du mélange gazeux, dans ce cas de l'air.

La membrane utilisée, est issue d'un dispositif industriel connue sous le nom de générateur d'azote pur.

Il s'agit d'un faisceau de fibres creuses construites dans un polymère organique dont les parois sont recouvertes d'un film mince assurant la partition des gaz.

Les caractéristiques physico-chimiques de ce type de membrane permettent de produire en continu, et sans régénération, un azote très appauvri notamment en oxygène, en vapeur d'eau, et en dioxyde de carbone, voire débarrassé de ces constituants minoritaires.

A titre d'exemple l'éluat issu du dispositif à membrane(s) ne contient plus qu'environ 200 ppm d'oxygène et de 5 ppm de vapeur d'eau et moins d'environ 10 ppm de dioxyde de carbone.

Cet appauvrissement s'accompagne d'un fort enrichissement en xénon, par exemple d'un facteur 9 à 10, c'est-à-dire que la concentration en xénon, qui dans l'air ambiant est généralement d'environ 87 ppb passe à environ 780 à 870 ppb par exemple 800 ppb.

On observe également un certain enrichissement en Krypton (Kr) et en Radon (Rn), qui est généralement, en particulier pour le krypton d'un facteur 2 à 3 par rapport au mélange gazeux initial.

Afin d'obtenir un fort enrichissement en xénon il a été mis en évidence qu'il est préférable d'opérer à un débit relativement faible : à savoir de 200 à 300 l/h par exemple 220 l/h pour le débit d'azote élué.

La température à laquelle est réalisée la perméation est généralement de 40 à 70°C par exemple 58°C.

Le traitement de l'injectat dans le dispositif à membranes, outre l'éluat décrit plus haut donne un perméat (10) essentiellement constitué d'azote et des constituants minoritaires en lesquels l'air a été appauvri : oxygène, dioxyde de carbone, vapeur d'eau, du fait du faible débit d'éluat préférentiellement mis en oeuvre, environ 98 à 99 % du débit initial d'injectat se retrouve dans le perméat.

A titre d'exemple pour un débit d'injectat de 18 m³/h sous 9 bars le débit de perméat est de 17,78 m³/h tandis que le débit d'éluat (9) est de 0,22 m³/h.

C'est cet éluat (9) qui, toujours sous pression (5 à 10 bars) est envoyé dans la deuxième étape du procédé selon l'invention dénommée étape de purification (2).

L'éluat passe tout d'abord par une vanne à trois voies (11) qui le dirige soit vers une colonne 12, soit vers une colonne 22.

L'éluat est par exemple dirigé vers la colonne (12) par l'intermédiaire des canalisations (13)(14).

Cette colonne (12) est remplie d'un adsorbant solide qui présente généralement une forte affinité vis-à-vis du xénon, de sorte qu'il est possible de réaliser l'adsorption à température ambiante, c'est-à-dire par exemple à 20°C, sans qu'il soit nécessaire d'utiliser une cryogénie.

A titre d'exemple d'adsorbant solide convenant particulièrement par la fixation du xénon on peut citer le charbon actif tel que celui commercialisé par la société Merck.

La pression mise en oeuvre est la même que celle de l'étape de perméation sur membrane et est donc généralement de 5 à 10 bars, de préférence de 9 bars.

Le débit est également de préférence un débit faible, correspondant au débit d'éluat (9) à la sortie du dispositif à membranes, et qui est généralement de 200 à 300 l/h, par exemple de 220 l/h.

La durée de cette opération d'adsorption est généralement de 1 à 5 heures, par exemple de 3 heures.

Dans ces conditions, il est possible d'obtenir un piégeage du xénon avec un rendement élevé par exemple supérieur à 99 %, voire même de 99,99%.

En même temps que le xénon, sont piégés sur la colonne (12) les dernières impuretés encore présentes dans le mélange azote, xénon (oxygène, dioxyde de carbone, vapeur d'eau, krypton, argon, radon, etc).

A la sortie de la colonne (12) on obtient un gaz formé d'azote essentiellement pur qui est dirigé, par l'intermédiaire des canalisations (15), de la vanne à 4 voies 16, de la vanne 17, puis des canalisations 18, 19, 21 et de la vanne 20 vers la deuxième colonne d'adsorption 22 remplie d'un adsorbant solide identique à celui de la première colonne 12.

Deux colonnes sont représentées sur la figure 1, mais il évident que l'installation peut en comprendre un nombre plus important.

La colonne 22 a été chargée, essentiellement en radon et en xénon dans les mêmes conditions que la colonne 12 dans le laps de temps précédent par exemple de 3 heures.

Pendant que la colonne 12 se trouve en phase d'adsorption on procède à l'élution des gaz retenus dans l'adsorbant solide de la colonne 22 sous l'action du courant d'azote de la canalisation 21.

Le débit d'azote pur pour l'élution du xénon est généralement un débit faible ainsi si le débit de gaz à l'entrée et à la sortie de la colonne 12 est de 220 l/h, le débit d'azote pur utilisé pour l'élution dans la colonne 22 ne représente qu'une fraction du débit d'entrée et sera d'environ 30 l/h, tandis que le reste de l'azote soit par exemple 190 l/h, sera évacué par les canalisations 23 et 25 munies de la vanne 24. La pression est identique à celle indiquée plus haut, c'est-à-dire 5 à 10 bars, de préférence 9 bars.

Pour réaliser la désorption et l'élution, on procède à un chauffage de l'adsorbant solide de la colonne 22 à l'aide d'une série de fours, de préférence des fours tubulaires 26, 27, 28 entourant chacun une section de la colonne 22.

On procède généralement tout d'abord à une montée progressive de la température de l'adsorbant depuis la température ambiante jusqu'à une température généralement de 250°C environ, moyennant quoi on réalise l'élution des composés autres que le xénon et le radon, qui sont restés piégés sur l'adsorbant solide, et qui sont plus faiblement adsorbés que Xe et Rn (vapeur d'eau, dioxyde de carbone, oxygène...); l'azote chargé en ces impuretés est évacué par la canalisation 29, les canalisations 30, 32, la vanne à 3 voies 33 et enfin les canalisations 34 et 35.

Lorsque la température de 250°C est atteinte on observe alors généralement selon l'invention, un plateau en température pendant une durée variable, par exemple de 20 minutes ou plus pour désorber, éluer spécifiquement le xénon.

L'élution du xénon a ainsi lieu à une température par exemple de 250°C, sous pression, à une pression, par exemple de 9 bars, sous un faible débit d'azote pur (gaz éluant), par exemple de 30 l/h et pendant une durée par exemple de 30 minutes par section de colonne, soit de 1 heure 30 pour l'ensemble de la colonne 22.

Une fois que la totalité du xénon adsorbé sur la colonne 22 a été désorbé on procède alors à la purge du radon qu'elle contient, ou plus généralement à la purge de toutes les impuretés éventuelles qui seraient adsorbées sur l'adsorbant de la colonne 22 plus fortement que le xénon. Dans ce but, on dirige non plus une partie (par exemple 30 l/h), mais la totalité, c'est-à-dire 220 l/h, du courant d'azote pur issu de la colonne 12 vers la colonne 22 (la vanne à deux voies 24 étant alors fermée).

La température et la pression restant inchangées, sous l'effet de ce balayage effectué à fort débit, le radon est entraîné par l'azote pur ; l'azote chargé en radon est évacué par les canalisations 29, 30, 32, 34, 35, et les vannes 16, 31 et 33 (ou piégé en vue d'une éventuelle mesure).

Suite à la purge du radon, la colonne 22 est refroidie jusqu'à la température ambiante et peut être de nouveau chargée.

En actionnant en particulier la vanne 11, les colonnes 12 et 22 sont alternativement soumises à des opérations de charge (adsorption) et d'élution (désorption), l'une des colonnes étant en charge tandis que l'autre est éluée et vice-versa.

Le mélange gazeux issu de l'étape de purification est ensuite envoyé dans l'étape suivante dénommée étape de concentration (3).

Ce mélange gazeux est alors constitué essentiellement de xénon et d'azote, et éventuellement et exceptionnellement de traces de radon si l'air traité est riche en radon.

Du fait que l'élution du xénon piégé dans les volumes 12 et 22 est réalisé avec un volume d'azote faible par rapport au volume entrant, (par exemple 30 l/h au lieu de 220 l/h), le xénon est déjà concentré par rapport au gaz initial et au gaz introduit dans l'étape de purification ; par exemple, ce gaz présente une concentration en xénon qui est voisine de 400 fois la concentration en xénon dans l'air ambiant.

Dans l'étape de concentration (3) le mélange gazeux d'azote et de xénon décrit ci-dessus est dirigé par l'intermédiaire de la vanne à 4 voies 31, et de la vanne 36 vers une colonne d'adsorption 37 contenant un adsorbant spécifique du xénon, à savoir par exemple le Carboxène® 1003, un charbon actif.

L'adsorption est réalisée généralement sous une pression de 5 à 10 bars, de préférence 9 bars, et à température ambiante, pendant une durée de 10 à 20 minutes, le débit de mélange gazeux est faible, par exemple de 10 à 50 l/h et la quantité d'adsorbant contenue dans la colonne 37 est notablement inférieure à celle contenue dans chacune des colonnes 12 et 22, à titre d'exemple, alors que chacune des colonnes 12 et 22 contient environ 340 grammes de charbon actif, la colonne 37 ne contient que 2,6 grammes de Carboxène.

Lorsque l'adsorption du xénon est terminée, on isole la colonne 37 par la vanne 38, et on stocke un certain volume d'azote pur dans le réservoir 39 muni de la vanne 40.

Pour la désorption, élution du xénon piégé sur la colonne 37, on ouvre la vanne 38 et l'azote pur contenu dans le réservoir 39 est envoyé dans la colonne 37.

L'élution a lieu généralement sous une pression de 1 bar, avec un débit d'azote faible par exemple de 2 l/heure, pendant une durée très courte par exemple de 1 minute, et à une température supérieure à 250°C, par exemple de 300°C, le chauffage de l'adsorbant étant réalisé grâce au four 41 de préférence de type tubulaire.

Du fait du faible volume d'azote utilisé pour l'élution, qui est par exemple 10 fois moindre que celui utilisé pour l'adsorption, le mélange gazeux issu de la colonne 37 et évacué par la vanne 36, est déjà fortement enrichi en xénon c'est-à-dire qu'il contient de 1 à 2 % en volume de xénon, par exemple 1,7% en volume.

Ce gaz est envoyé dans une deuxième colonne d'adsorption 46 de l'étape de concentration, par l'intermédiaire de la vanne à 4 voies 31, de la vanne à 3 voies 43, des canalisations 42 et 44 et de la vanne à 2 voies 45.

La colonne 46 contient généralement le même type d'adsorbant que la colonne 37, à savoir du Carboxène 1003 mais en quantité moindre, à titre d'exemple si la colonne 37 contient 2,6 grammes d'adsorbant, la colonne 46 n'en contiendra qu'environ 1 g.

L'adsorption sur la colonne 46 est réalisée généralement dans les mêmes conditions que l'adsorption sur la colonne 37.

De manière analogue en fin d'adsorption on emprisonne un certain volume d'azote pur dans le réservoir 47, isolé par les vannes à deux voies 48 et 49.

On décrit sur la figure 1 une installation comprenant dans l'étape de concentration deux colonnes, mais il est bien évident que selon l'enrichissement recherché, c'est-à-dire selon la concentration désirée en xénon dans le mélange gazeux final, le nombre d'adsorbants solides et d'adsorptions et d'élutions successives dans l'étape de concentration (3), pourra être supérieur et pourra aller par exemple jusqu'à 4.

Après avoir répété huit fois la séquence qui vient d'être décrite, c'est-à-dire avoir procédé à huit adsorptions sur l'adsorbant 46 sans jamais l'éluer, on effectue enfin l'élution du xénon contenu sur la dernière colonne d'adsorption de l'étape de concentration (dans le cas présent la colonne 46) le chauffage étant assuré par l'intermédiaire du four 50, généralement tubulaire.

Généralement, l'élution débute par une mise sous vide par l'intermédiaire de la vanne 52 et de la canalisation de mise sous vide 56, puis on effectue une élution "flash" par rinçage sous 1 bar à 300°C avec l'azote pur issu du réservoir 47.

L'azote, issu de la colonne 46, est fortement enrichi en xénon, à titre d'exemple on obtient par exemple un mélange contenant 4,5 cm$^3$ de xénon dans 20 cm$^3$ d'azote.

Cela correspond à ce que l'on qualifie dans l'invention de "fort enrichissement" ou enrichissement substantiel en xénon, en effet la teneur en xénon du volume d'azote final est à titre d'exemple égale dans le cas ci-dessus à environ 2.10$^6$ fois la teneur en xénon dans l'air.

L'azote fortement enrichi en xénon est ensuite, selon la figure 1, dirigé vers un conteneur à xénon 51 par l'intermédiaire des vannes 52 et 54 et de la canalisation 53.

Le conteneur à xénon fait partie de l'étape de mesure 4 à laquelle est généralement associé le procédé de l'invention, l'étape de mesure met en oeuvre un appareil de mesure 55, qui peut être tout appareil adéquate, par exemple un spectromètre gamma pour détecter les espèces radioactives du xénon telles que $^{135}$Xe, $^{133}$Xe, $^{131m}$Xe, $^{133m}$Xe qui sont présentes dans l'atmosphère.

Il est bien évident que l'installation représentée sur la figure 1 comprend également toute une série de dispositifs de mesure et de régulation tels que thermocouples, manomètres, débitmètres, capteur d'oxygène, hygromètre, etc... qui n'ont pas été indiqués sur la figure par soucis de clarté.

EXEMPLE

Cet exemple est destiné à illustrer la mise en oeuvre du procédé de l'invention pour obtenir à partir de l'air un mélange gazeux comprenant essentiellement de l'azote fortement enrichi en Xénon (Xe) .

L'installation utilisée dans cet exemple est sensiblement analogue à celle dont le schéma fonctionnel est décrit sur la figure 1.

45 m$^3$ d'air naturel, comprimé sous 9 bars, sont introduits, à raison de 15 m$^3$/h, dans un dispositif à perméation gazeuse (appelé membrane) spécialisé dans la production d'azote pur à partir d'air standard.

Le type de membrane utilisé, est issu d'un dispositif industriel connu sous l'appellation de générateur d'azote pur.

Il s'agit d'un faisceau de fibres creuses construites dans un polymère organique dont les parois sont recouvertes d'un film mince assurant la partition des gaz.

Les propriétés physico-chimiques de la membrane sont telles que l'azote pur produit (ou élué) est non seulement débarrassé de l'oxygène (<200 ppm), de la vapeur d'eau (5 ppm) et du dioxyde de carbone(< 10 ppm) mais également 9 fois plus riche en Xénon que l'air ambiant (et probablement plus de 10 fois plus riche en radon que l'air ambiant).

Toutefois, pour obtenir cet enrichissement, il est nécessaire de réduire le débit d'azote élué à 250 ln/h. Ce faisant, 98% de l'air comprimé est perdu par le canal de la perméation.

Pendant 3 heures, ce mélange d'azote et de Xénon (780 ppb) est insufflé, à température ambiante, sous 9 bars de pression, à raison de 250 ln/h sur les 340 grammes de charbon actif (Merck) qui remplissent la colonne 12. L'affinité du xénon pour cet adsorbant est suffisamment forte pour qu'on puisse l'adsorber sans recourir à une cryogénie tout en maintenant une longueur de colonne raisonnable (1 m ; diamètre 3,2 cm). Le rendement de cette étape de piégeage est supérieur à 99%.

Pendant le même temps, la colonne 22, chargée dans les mêmes conditions pendant les trois heures précédentes, est éluée, purgée du radon qu'elle contient et refroidie jusqu'à la température ambiante. L'élution du xénon a lieu à 250°C, sous 9 bars à raison de 30 ln/h d'azote. Ce gaz vecteur, exempt de xénon, est récupéré en sortie de la colonne 12. Ces conditions expérimentales permettent de faire la séparation chromatographique du xénon et du radon c'est-à-dire d'éluer le xénon indépendamment du radon. L'élution se poursuit pendant 1 heure 30.

Pendant le dernier tiers du temps, le mélange d'azote et de xénon (0,005%) est adsorbé, sous 9 bars, sur 2,6 grammes d'un nouvel adsorbant (Carboxène® 1003) contenu dans la colonne 37. En fin d'adsorption, au moment d'isoler la colonne 37, on emprisonne un volume d'azote, sous 9 bars, dans le réservoir 39 de 200 cm$^3$.

Il faut maintenant purger la colonne 22 du radon qu'elle contient. Pour ce faire, on injecte dans la colonne 22, pendant 15 minutes, tout le gaz disponible en sortie de colonne 12.

Cette disposition suffit à arracher les quelques becquerels de radon piégés.

Il reste maintenant 1 heure 15 pour refroidir la colonne 2 avant d'entreprendre un nouveau cycle d'adsorption sur celle-ci. Pour évacuer au plus vite la chaleur, une fraction du perméat (1 à 2m$^3$/h) est poussée dans les fours 26, 27, 28 entourant la colonne 22.

Dans les 10 minutes qui suivent la purge du radon, on réalise la désorption du xénon piégé sur la colonne 37. L'élution a lieu à 300°C, sous 1 bar, à raison de 2 ln/h d'azote fournis par le réservoir 39. Pendant la dernière des 10 minutes, le mélange d'azote et de xénon (1,7%) est adsorbé, à température ambiante et sous 1 bar de pression, sur 1 gramme de Carboxène 1003 contenu dans la colonne 46. Il suffit de 33 cm$^3$ d'azote pour terminer l'élution. En fin d'adsorption, au moment d'isoler la colonne 46, on emprisonne un volume d'azote, sous 1 bar , dans le réservoir 47. Pendant l'heure à venir, l'enceinte thermostatée enfermant la colonne 37 n'est plus alimentée et refroidit naturellement jusqu'à retrouver la température ambiante.

Ceci termine le premier des 8 cycles de 3 heures au terme desquels la colonne 46 contient 4,5 cm$^3$ de xénon. Celle-ci est alors désorbée à 300°C puis détendue dans la cellule de comptage, on détend le contenu du réservoir 47 dans cette dernière. Au final, ce dispositif a permis de produire en 24 heures de fonctionnement 4,5 cm$^3$ de xénon dans 20 cm$^3$ d'azote. On réalise ainsi un enrichissement substantiel. La teneur en xénon du volume d'azote final est égale à environ 2x10$^{+6}$ fois celle du xénon dans l'air.

**Revendications**

**1.** Procédé de purification d'un premier constituant minoritaire, et de concentration de celui-ci dans le constituant majoritaire d'un mélange gazeux, comprenant outre ledit premier constituant minoritaire, et ledit constituant majoritaire, un ou plusieurs autre(s) constituant(s) minoritaire(s), ledit procédé comprenant la succession d'étapes suivantes :

- Perméation sélective dudit mélange gazeux initial à travers une membrane spécifique (8) du mélange gazeux traité, moyennant quoi on obtient un mélange gazeux enrichi en ledit premier constituant minoritaire et très appauvri ou faiblement enrichi en ledit ou lesdits autre(s) constituant(s) minoritaire(s);

- Purification dudit mélange gazeux enrichi en ledit premier constituant minoritaire, issu de la première étape, par adsorption à température ambiante sur un adsorbant solide (18, 22) qui est un absorbant spécifique présentant une forte affinité vis-à-vis du premier constituant minoritaire, puis élution, moyennant quoi on obtient un mélange gazeux essentiellement constitué dudit constituant majoritaire et dudit premier constituant minoritaire, et duquel ont été éliminés le ou les autre(s) constituant(s) minoritaire(s),

- Concentration dudit premier constituant minoritaire dans le constituant majoritaire issu de la deuxième étape, par adsorption(s) et élution(s) successive(s) sur un adsorbant solide (37, 46) qui est un absorbant spécifique présentant une affinité élévée vis-à-vis du premier constituant minoritaire, jusqu'à obtention d'un mélange gazeux final essentiellement constitué dudit constituant majoritaire et dudit premier constituant minoritaire, fortement enrichi en ledit premier constituant minoritaire par rapport audit mélange gazeux initial, et présentant la concentration désirée en ledit premier constituant minoritaire.

2. Procédé selon la revendication 1, dans lequel le mélange gazeux initial est un mélange gazeux dont le constituant majoritaire est choisi parmi l'azote, l'hydrogène, l'oxygène, les hydrocarbures gazeux, le dioxyde de carbone.

3. Procédé selon la revendication 2, dans lequel ledit mélange gazeux est l'air.

4. Procédé selon l'une quelconque des revendications 1 à 3, dans lequel ledit premier constituant minoritaire est choisi parmi les gaz rares : Hélium, Néon, Argon, Krypton, Xénon et Radon.

5. Procédé selon l'une quelconque des revendications 1 à 4, dans lequel ledit premier constituant minoritaire se trouve sous la forme de l'un quelconque de ses isotopes radioactifs ou non, ou d'un mélange de deux ou plus de ceux-ci.

6. Procédé selon la revendication 5, dans lequel ledit premier constituant minoritaire est du Xénon naturel en mélange avec un ou plusieurs de ses isotopes radioactifs tels que $^{131}$Xe, $^{135}$Xe, $^{131m}$Xe, et $^{133m}$Xe.

7. Procédé selon la revendication 1, dans lequel au cours de la première étape, afin d'obtenir un mélange gazeux enrichi en ledit premier constituant minoritaire et très appauvri en ledit ou lesdits autre(s) constituant(s) minoritaire(s), on règle le débit de mélange gazeux (éluat) quittant le système de perméation et/ou la pression imposée en amont de la membrane.

8. Procédé selon la revendication 1, dans lequel lors de l'étape de purification, les conditions de l'élution notamment débit de gaz d'élution et/ou température d'élution et/ou pression et/ou durée de l'élution soient choisies de façon à permettre lors de l'élution la séparation du premier constituant minoritaire du mélange gazeux du ou des autre(s) constituant(s) minoritaire(s) du mélange gazeux.

9. Procédé selon la revendication 1, dans lequel l'étape de purification comprend au moins deux systèmes ou dispositifs d'adsorption garnis d'adsorbant solide, l'un de ces dispositifs se trouvant en phase d'adsorption, tant qu'un autre se trouve en phase de désorption, le gaz d'élution utilisé étant constitué par le constituant majoritaire purifié, directement issu du dispositif en phase d'adsorption, et sans stockage intermédiaire.

10. Procédé selon la revendication 1, dans lequel la concentration est réalisée en multipliant les étapes d'adsorption-désorption et en réduisant à chaque fois la masse d'adsorbant utilisé ainsi que le volume de gaz d'élution.

11. Procédé selon la revendication 1, dans lequel l'absorbant solide utilisé dans l'étape de concentration est différent de l'adsorbant utilisé lors de l'étape de purification.

12. Procédé selon l'une quelconque des revendications 1 à 11, dans lequel ledit mélange gazeux *est l'air* et ledit premier constituant minoritaire est le Xénon.

13. Procédé selon la revendication 12, dans lequel la perméation sélective est réalisée à un débit faible d'azote élué.

14. Procédé selon la revendication 12, dans lequel l'adsorbant solide de l'étape de purification et/ou de concentration est du charbon actif.

15. Procédé selon la revendication 12, dans lequel l'élution du Xénon lors de l'étape de purification, est réalisée à partir de 250°C en observant un plateau de température pendant une durée de 20 minutes ou plus, sous faible débit d'azote pur, et sous pression.

16. Procédé selon la revendication 14, dans lequel l'adsorbant solide de l'étape de concentration est du Carboxène® .

**17.** Procédé de détection et/ou de mesure d'un premier constituant minoritaire d'un mélange gazeux dans lequel on réalise la purification, et la concentration en ce premier constituant minoritaire, du mélange gazeux par le procédé selon l'une quelconque des revendications 1 à 16, puis à l'issue de l'étape de concentration on réalise la détection et/ou la mesure de premier constituant minoritaire dans le mélange gazeux final.

**18.** Procédé selon la revendication 17, dans lequel ledit ledit constituant minoritaire est constitué en partie d'espèce(s) radioactive(s) du Xénon, et le mélange gazeux est l'air.

**19.** Procédé selon la revendication 18, dans lequel on réalise la détection des espèces radioactives du Xénon notamment par spectrométrie gamma.

**20.** Procédé selon la revendication 18, dans lequel on réalise la mesure des rapports des concentrations des différents radio-isotopes du Xénon afin de discriminer les sources d'émission.

**21.** Installation pour la mise en oeuvre du procédé selon l'une quelconque des revendications 1 à 16 comprenant :

- des moyens de perméation sélective (8) d'un mélange gazeux comprenant un premier constituant minoritaire, un constituant majoritaire, et un ou plusieurs autre(s) constituant(s)
- minoritaire(s), lesdits moyens de perméation comprenant au moins une membrane spécifique du mélange gazeux traité et permettant d'obtenir un mélange gazeux enrichi en ledit premier constituant minoritaire et très appauvri ou faiblement enrichi en ledit ou lesdits autre(s) constituant(s) minoritaire(s) ;
- des moyens de purification (18,22) dudit mélange gazeux, enrichi en ledit premier constituant minoritaire, issu desdits moyens de perméation, lesdits moyens de purification comprenant au moins un dispositif d'adsorption, tel qu'une colonne, garni d'un adsorbant solide qui est un absorbant spécifique présentant une forte affinité vis-à-vis du premier constituant minoritaire, et des moyens d'élution dudit dispositif permettant d'obtenir un mélange gazeux essentiellement constitué dudit constituant majoritaire et dudit premier constituant minoritaire, et duquel ont été éliminés le ou les autre(s) constituant(s) minoritaire(s) ;
- des moyens de concentration (37,46) dudit premier constituant minoritaire dans le constituant majoritaire issu desdits moyens de purification, lesdits moyens de concentration comprenant un nombre suffisant de dispositifs d'adsorption tels que des colonnes, garnis d'un adsorbant solide qui est un absorbant spécifique présentant une affinité élevée vis-à-vis du premier constituant minoritaire, et des moyens d'élution desdits dispositifs, pour obtenir un mélange gazeux final essentiellement constitué dudit constituant majoritaire et dudit premier constituant minoritaire, fortement enrichi en ledit premier constituant minoritaire par rapport au mélange gazeux initial et présentant la concentration désirée en ledit premier constituant minoritaire.

**Claims**

**1.** Method for purifying a first minority constituent and concentrating the latter in the majority constituent of a gas mixture containing, in addition to said first minority constituent and said majority constituent, one or more other minority constituent(s), said method comprising the succession of following steps:

- selective permeation of said initial gas mixture through a membrane (8) specific to the treated gas mixture, after which a gas mixture is obtained enriched in said first minority constituent and much depleted or only slightly enriched in said other minority constituent(s);
- purifying said gas mixture enriched in said first minority constituent derived from the first step, by adsorption at ambient temperature on a solid adsorbent (18, 22), then elution, after which a gas mixture is obtained essentially made up of said majority constituent and said first minority constituent, and from which the other minority constituent(s) have been removed,
- concentrating said first minority constituent in the majority constituent derived from the second step, by one or more successive adsorption and elution operations on a solid adsorbent (37, 46), until an end gas mixture is obtained essentially made up of said majority constituent and said first minority constituent, highly enriched, in said first minority constituent relative to said initial gas mixture, and having the desired concentration of said first minority constituent.

**2.** Method according to claim 1, in which the initial gas mixture is a gas mixture whose majority constituent is chosen from among nitrogen, hydrogen, oxygen, gaseous hydrocarbons, carbon dioxide.

**3.** Method according to claim 2, in which said gas mixture is air.

**4.** Method according to any of claims 1 to 3, in which said first minority constituent is chosen from among the rare gases: helium, neon, argon, krypton, xenon and radon.

5. Method according to any of claims 1 to 4, in which said first minority constituent is in the form of any one of its isotopes whether radioactive or not, or of a mixture of two or more thereof.

6. Method according to claim 5, in which said first minority constituent is natural xenon in a mixture with one or more of its radioactive isotopes such as $^{131}$Xe, $^{135}$Xe, $^{131m}$Xe and $^{133m}$Xe.

7. Method according to claim 1, in which during the first step, in order to obtain a gas mixture enriched in said first minority constituent and much depleted in said other minority constituent(s), adjustment is made to the flow of gas mixture (eluate) leaving the permeation system and/or to the set pressure upstream from the membrane.

8. Method according to claim 1, in which during the purification step, the elution conditions in particular the flow of elution gas and/or elution temperature and/or pressure and/or time of elution are chosen such as to enable, during elution, the separation of the first minority constituent of the gas mixture from the other minority constituent(s) of the gas mixture.

9. Method according to claim 1, in which the purification step comprises at least two adsorption systems or devices lined with solid adsorbent, one of these devices being in adsorption phase while the other is in desorption phase, the elution gas used being made up of the purified majority constituent directly derived from the adsorption phase device and without any intermediate storage.

10. Method according to claim 1, in which concentration is made by multiplying the adsorption-desorption steps and by reducing each time the mass of adsorbent used and the volume of elution gas.

11. Method according to claim 1, in which the solid adsorbent used during the concentration step is different from the adsorbent used during the purification step.

12. Method according to any of claims 1 to 11, in which said gas mixture is air and said first minority constituent is xenon.

13. Method according to claim 12, in which selective permeation is performed with a slow flow of eluted nitrogen.

14. Method according to claim 12, in which the solid adsorbent of the purification step and/or concentration step is activated carbon.

15. Method according to claim 12, in which the elution of xenon during the purification step is conducted at 250°C and over observing a temperature plateau for a time of 20 minutes or more, under a slow flow of pure nitrogen, and under pressure.

16. Method according to claim 14, in which the solid adsorbent of the concentration step is Carboxene®.

17. Method for detecting and/or measuring a first minority constituent of a gas mixture in which purification is made, and concentration of the gas mixture into this first minority constituent using the method according to any of claims 1 to 16, then after the concentration step the detection and/or measurement of the first minority constituent is made in the end gas mixture.

18. Method according to claim 17, in which said minority constituent is made up in part of one or more radioactive species of xenon, and the gas mixture is air.

19. Method according to claim 18, in which the detection is made of the radioactive species of xenon, in particular by gamma spectrometry.

20. Method according to claim 18, in which the concentration ratios of the different radio-isotopes of xenon are measured in order to discriminate the sources of emission.

21. Installation for the implementation of the method according to any of claims 1 to 16, comprising:

- means (8) for the selective permeation of a gas mixture containing a first minority constituent, a majority constituent, and one or more other minority constituent(s), said permeation means comprising at least one membrane specific to the treated gas mixture and enabling a gas mixture to be obtained enriched in said first minority constituent and much depleted or only slightly enriched in said other minority constituent(s);
- means (18, 22) for purifying said gas mixture, enriched in said first minority constituent, derived from said permeation means, said purification means comprising at least one adsorption device such as a column lined with solid adsorbent, which is a specific adsorbent with a strong affinity for the first minority constituent, and means to elute said device with which it is possible to obtain a gas mixture essentially made up of said majority constituent and said first minority constituent, and from which the other minority constituent(s) have been removed;

- means (37, 46) for concentrating said first minority constituent in the majority constituent derived from said purification means, said concentration means comprising a sufficient number of adsorption devices such as columns, lined with a solid adsorbent, which is a specific adsorbent with a high affinity for the first minority constituent, and elution means for said devices, to obtain an end gas mixture essentially made up of said majority constituent and said first minority constituent, highly enriched in said first minority constituent relative to the initial gas mixture and having the desired concentration of said first minority constituent.

**Patentansprüche**

1. Verfahren zur Reinigung eines ersten Nebenbestandteils und zum Konzentrieren desselben in dem Hauptbestandteil einer Gasmischung, die außer dem genannten Nebenbestandteil und dem genannten Hauptbestandteil einen oder mehrere weitere Nebenbestandteile enthält, wobei das Verfahren die nachstehende Aufeinanderfolge von Stufen umfasst:

   - selektive Permeation der Ausgangsgasmischung duch eine Membran (8), die für die behandelte Gasmischung spezifisch ist, mittels der man eine Gasmischung erhält, die an dem genannten ersten Nebenbestandteil angereichert ist und an dem (den) genannten weiteren Nebenbestandteil(en) sehr verarmt oder schwach angereichert ist;
   - Reinigung der an dem genannten ersten Nebenbestandteil angereicherten Gasmischung, die in der ersten Stufe erhalten worden ist, durch Adsorption bei Umgebungstemperatur an einem festen Adsorbens (68,22), bei dem es sich um ein spezifisches Adsorbens handelt, das eine starke Affinität für den ersten Nebenbestandteil hat, anschließende Elution, mittels der man eine Gasmischung erhält, die im wesentlichen besteht aus dem genannten Hauptbestandteil und dem genannten ersten Nebenbestandteil und aus der der (die) weitere(n) Nebenbestandteil(e) entfernt worden ist (sind),
   - Konzentrieren des genannten ersten Nebenbestandteils in dem Hauptbestandteil, der in der zweiten Stufe erhalten worden ist, durch eine oder mehrere aufeinanderfolgende Adsorptionen und Elutionen an einem festen Adsorbens (37, 46), bei dem es sich um ein spezifisches Adsorbens handelt, das eine erhöhte Affinität gegenüber dem ersten Nebenbestandteil hat, bis eine End-Gasmischung erhalten wird, die im wesentlichen besteht aus dem genannten Hauptbestandteil und dem genannten ersten Nebenbestandteil, die stark angereichert ist an dem genannten ersten Nebenbestandteil gegenüber der Ausgangs-Gasmischung, und die gewünschte Konzentration an dem genannten ersten Nebenbestandteil aufweist.

2. Verfahren nach Anspruch 1, worin die Ausgangs-Gasmischung eine Gasmischung ist, deren Hauptbestandteil ausgewählt ist aus Stickstoff, Wasserstoff, Sauerstoff, gasförmigen Kohlenwasserstoffen und Kohlendioxid.

3. Verfahren nach Anspruch 2, worin die Gasmischung Luft ist.

4. Verfahren nach einem der Ansprüche 1 bis 3, worin der erste Nebenbestandteil ausgewählt ist aus den Edelgasen Helium, Neon, Argon, Krypton, Xenon und Radon.

5. Verfahren nach einem der Ansprüche 1 bis 4, worin der erste Nebenbestandteil in Form eines beliebigen seiner radioaktiven oder nicht radioaktiven Isotopen oder in Form einer Mischung von zwei oder mehr derselben vorliegt.

6. Verfahren nach Anspruch 5, worin der erste Nebenbestandteil natürliches Xenon im Gemisch mit einem oder mehreren seiner radioaktiven Isotopen wie $^{131}$Xe, $^{135}$Xe, $^{131m}$Xe und $^{133m}$Xe ist.

7. Verfahren nach Anspruch 1, worin im Verlaufe der ersten Stufe zur Herstellung einer Gasmischung, die an dem ersten Nebenbestandteil angereichert ist und an dem (den) weiteren Nebenbestandteil (en) stark verarmt ist, die Durchflussmenge der das Permeationssystem verlassenden Gasmischung (Eluat) und/oder der stromaufwärts von der Membran angewendete Druck geregelt werden.

8. Verfahren nach Anspruch 1, worin in der Reinigungsstufe die Elutions-Bedingungen, insbesondere die Durchflussmenge des Elutionsgases und/oder die Elutions-Temperatur und/oder der Elutionsdruck und/oder die Dauer der Elution so gewählt werden, dass bei der Elution der erste Nebenbestandteil der Gasmischung von dem (den) weiteren Nebenbestandteil(en) der Gasmischung abgetrennt werden kann.

9. Verfahren nach Anspruch 1, worin die Reinigungsstufe mindestens zwei Adsorptionssysteme oder -einrichtungen umfasst, die mit einem festen Adsorbens ausgestattet sind, wobei eine dieser Einrichtungen in der Adsorptionsphase vorliegt, während eine andere derselben in der Desorptionsphase vorliegt, wobei das verwendete Elutionsgas, das aus dem gereinigten Hauptbestandteil besteht, direkt aus der Einrichtung in der Adsorptionsphase ohne Zwischenlagerung stammt.

10. Verfahren nach Anspruch 1, worin das Konzentrieren in der Weise durchgeführt wird, dass man die Adsorptions-Desorptions-Stufen vervielfacht und jedesmal die Masse des verwendeten Adsorbens sowie das Volumen des Elutionsgases vermindert.

11. Verfahren nach Anspruch 1, worin das in der Konzentrationsstufe verwendete feste Adsorbens verschieden ist von dem in der Reinigungsstufe verwendeten Adsorbens.

12. Verfahren nach einem der Ansprüche 1 bis 11, worin die Gasmischung Luft ist und der erste Nebenbestandteil Xenon ist.

13. Verfahren nach Anspruch 12, worin die selektive Permeation bei einer geringen Durchflussmenge des eluierten Stickstoffs durchgeführt wird.

14. Verfahren nach Anspruch 12, worin das feste Adsorbens in der Reinigungsstufe und/oder in der Konzentrationsstufe Aktivkohle ist.

15. Verfahren nach Anspruch 12, worin die Elution von Xenon in der Reinigungsstufe ab 250 °C durchgeführt wird, wobei man während einer Zeitdauer von 20 min oder mehr bei einer geringen Durchflussmenge von reinem Stickstoff und unter Druck ein Temperatur-Plateau feststellt.

16. Verfahren nach Anspruch 14, worin das feste Adsorbens der Konzentrationsstufe Carboxène® ist.

17. Verfahren zum Nachweis und/oder zur Messung eines ersten Nebenbestandteils einer Gasmischung, bei dem die Reinigung und das Konzentrieren des ersten Nebenbestandteils der Gasmischung nach dem Verfahren nach einem der Ansprüche 1 bis 16 durchgeführt wird und dann am Ende der Konzentrationsstufe der Nachweis und/oder die Bestimmung des ersten Nebenbestandteils in der fertigen Gasmischung durchgeführt wird.

18. Verfahren nach Anspruch 17, worin der Nebenbestandteil zum Teil aus einem oder mehreren radioaktiven Species von Xenon besteht und die Gasmischung Luft ist.

19. Verfahren nach Anspruch 18, worin der Nachweis der radioaktiven Species von Xenon insbesondere durch Gammaspektrometrie durchgeführt wird.

20. Verfahren nach Anspruch 18, worin die Messung der Verhältnisse zwischen den Konzentrationen der verschiedenen Radioisotopen von Xenon durchgeführt wird, um die Emissionsquellen voneinander zu unterscheiden.

21. Vorrichtung zur Durchführung des Verfahrens nach einem der Ansprüche 1 bis 16, die umfasst:

- Permeations-Einrichtungen (8), die selektiv für eine Gasmischung sind, die einen ersten Nebenbestandteil, einen Hauptbestandteil und einen oder mehrere weitere Nebenbestandteile aufweist, wobei die genannten Permeations-Einrichtungen mindestens eine für die behandelte Gasmischung spezifische Membran umfassen und die Herstellung einer Gasmischung, die an dem genannten ersten Nebenbestandteil angereichert ist und an dem (den) genannten weiteren Nebenbestandteil(en) stark verarmt oder schwach angereichert ist, erlauben;

- Einrichtungen (18, 22) zur Reinigung der Gasmischung, die an dem genannten ersten Nebenbestandteil angereichert ist, der aus den Permeations-Einrichtungen stammt, wobei die Reinigungs-Einrichtungen mindestens eine Adsorptions-Einrichtung wie z.B. eine Kolonne, die mit einem festen Adsorbens ausgestattet ist, bei dem es sich um ein spezifisches Adsorbens handelt, das eine starke Affinität gegenüber dem ersten Nebenbestandteil hat, und Einrichtungen zur Elution aus der Einrichtung umfassen, welche die Herstellung einer Gasmischung erlauben, die im wesentlichen besteht aus dem genannten Hauptbestandteil und dem genannten ersten Nebenbestandteil, aus der der (die) weitere(n) Nebenbestandteil(e) eliminiert worden sind;

- Einrichtungen (37,46) zum Konzentrieren des ersten Nebenbestandteils in dem Hauptbestandteil, der aus den Reinigungs-Einrichtungen stammt, wobei die Konzentrations-Einrichtungen eine ausreichende Anzahl von Adsorptions-Einrichtungen, wie z.B. Kolonnen, die mit einem festen Adsorbens ausgestattet sind, bei dem es sich um ein spezifisches Adsorbens handelt, das eine hohe Affinität gegenüber dem ersten Nebenbestandteil hat, und Einrichtungen zum Eluieren der genannten Einrichtungen umfassen, zur Herstellung einer fertigen Gasmischung, die im wesentlichen besteht aus dem Hauptbestandteil und dem ersten Nebenbestandteil, die stark angereichert ist an dem genannten ersten Nebenbestandteil gegenüber der anfänglichen Gasmischung und die gewünschte Konzentration an dem genannten ersten Nebenbestandteil aufweist.